# EUROPEAN PATENT APPLICATION

(11) **EP 1 787 897 A1**
(43) Date of publication of application: **23.05.2007**
(21) Application number: 05025197.4
(22) Date of filing: 18.11.2005
(51) Int. Cl.: B62D 65/12

(54) **Decking cone as aligning device**

(71) Applicant: Ford Global Technologies, LLC, Dearborn, MI 48126 (US)
(72) Inventor: Brokholc, Michal, 436 45 Askim (SE); Klar, Niklas, 413 18 Göteborg (SE)
(74) Representative: Szelagowski, Helen

(57) **Abstract**

There is provided a decking cone device (10) as auxiliary tool adapted for automatically mutually anguIarly aligning and laterally aligning at least a first component part (500) to a second component part (510). The device (10) includes one or more features (45) for laterally and angularly engaging onto or into the first component (500). Moreover, the device (10) has external surfaces (22) so shaped so as to cooperate with edges of a hole (920) preferably of rhombic shape formed in the second component part (510). Furthermore, the device (10) is operable so as to generate when the decking device (10) engaged onto or into the first component part (500) is offered to the hole (920) in the second component part (510) lateral end angular alignment forces (1020) so as to mutually laterally and angularly align said first component part (500) to said second component part (510).

## Description

### Field of the Invention

The present invention relates to decking cone devices operable to assist in mutual alignment and subsequently handling of assembled automotive components during fabrication of road vehicles. Moreover, the present invention also concerns methods of mutually aligning and subsequently handling assembled automotive components during fabrication of road vehicles.

### Background to the invention

During mass production of products, it is desirable that production processes should be as efficient and effective as possible. Complex contemporary products often require a high input of human labor during manufacture which can represent a significant portion of a cost of finished such manufactured product provided to consumers.

When manufacturing road vehicles, numerous component parts are assembled together with high reproducibility so as to provide a reliable and dependable road vehicle. Automotive component parts which are sub-optimally designed for manufacture can potentially slow down manufacturing rendering vehicle manufacture less efficient and adding to manufacturing cost. Moreover, during vehicle manufacture, it is often desirable to handle groups of automotive components assembled together to render manufacturing more efficient, for example sub-assemblies of components such as suspension systems for mounting to vehicle chassis components.

In a context of the present invention, it is convenient to attach vehicle suspension sub-assemblies to vehicle chasses during part of a vehicle assembly process. Moreover, it has been found in practice that a technical problem arises in quickly and easily aligning and securing such suspension sub-assemblies to chasses during vehicle assembly; for example, various holes need to be aligned during manufacture to receive securing bolts or similar fasteners. Precision alignment of holes not only needs care and attention, but can also result in assembly operator fatigue on account of a degree of continuous concentration required.

### Summary of the invention

An object of the present invention is to provide a decking cone device which is capable of being used in manufacturing, for example in automotive manufacture, for more rapidly aligning and subsequently holding components together prior to mutually securing the components together.

According to a first aspect of the invention, there is provided a decking cone device adapted for automatically mutually angularly aligning and laterally aligning at least a first component part to a second component part, said decking device including one or more features for laterally and angularly engaging onto or into said first component part, said decking device having external surfaces so shaped so as to cooperate with edges of a hole formed in the second component part, the decking device being operable so as to generate when the decking device engaged onto or into the first component part is offered to the hole in the second component part lateral and angular alignment forces so as to mutually laterally and angularly align said first component part to said second component part.

The invention is of advantage in that the decking device is capable of automatically generating alignment forces when the first and second component parts are offered together so as to laterally and angularly mutually align the first and second component parts together.

Preferably, the decking device further comprises retaining features for maintaining the first and second component parts mutually held together when mutually offered together. Such a feature is of benefit in that it enables the first and second component parts to be subsequently handled as an aligned configuration for undergoing subsequent manufacturing operations, for example affixing the first and second component parts together in alignment so that the decking device can be subsequently removed and reused.

Preferably, the device comprises a tapered portion so shaped so as to generate minimal angular alignment forces when the tapered portion is angularly aligned to the hole, said tapered portion being so shaped so as to be capable of generating progressively increasing alignment forces as the device is progressively offered into the hole. Interaction of the surface of the tapered portion with the hole is an important feature of the invention for providing lateral and angular alignment forces automatically directed to ensure mutual alignment of the first and second component parts.

Preferably, in the decking device, the tapered portion is formed so as to be of substantially rhombic cross-section to cooperate with the hole being implemented to be also of substantially rhombic shape.

Preferably, in the decking device, the tapered portion at its greatest transverse cross-sectional area is adapted to be substantially similar in shape to said hole and a margin smaller than said hole. More preferably, in the decking device, the margin is substantially 0.2 mm to accommodate manufacturing tolerance when forming the hole.

Preferably, in the decking device, the retaining features include at least one pivotally-mounted member resiliently biased outwardly from said device, said at least one pivotally-mounted member being operable to clip onto one or more edges of said hole for retaining said decking device engaged with said hole and thus held to said second component part. Conveniently, the retaining features are implemented as spring-loaded flipper arms which automatically engage onto edges of the hole when the first and second component parts are mutually offered together in mutual lateral and angular alignment.

Preferably, the decking device includes an attachment for attaching said device to said first component part for maintaining them mutually affixed when the decking device in operation is offered to said hole in said second component part.

Preferably, the decking device is adapted to be reused in manufacture for repetitively mutually aligning examples of said first and second components parts. More preferably, the decking device is adapted for mutually laterally and angularly aligning automotive suspension subassemblies to corresponding portions of vehicle chasses during road vehicle manufacture.

According to a second aspect of the present invention, there is provided a method of applying a decking cone device for automatically mutually angularly aligning and laterally aligning at least a first component part to a second component part, said method including steps of:
(a) engaging said decking device into or onto said first component part, said decking device including one or more features for laterally and angularly engaging onto said first component;
(b) offering said first component part via said decking device engaged thereto to a hole included in the second component part, said decking device having external surfaces so shaped so as to cooperate with edges of the hole formed in the second component part so as to generate when the decking device engaged onto the first component part is offered to the hole in the second component part lateral and angular alignment forces so as to mutually laterally and angularly align said first component part to said second component part; and
(c) deploying retaining features for holding the device into a position for retaining said mutual angular and lateral alignment, so that said at least first and second component parts remain mutually in angular and lateral alignment.

Preferably, the method includes further steps of:
(d) applying fasteners to affix the at least first and second component parts mutually together in angular and lateral alignment; and
(e) after mutual fixing of the at least first and second component parts together, removing the decking device for subsequent reuse in angularly and laterally aligning similar at least first and second component parts.

It will be appreciated that features of the invention are susceptible to being combined in any combination without departing from the scope of the invention as defined by the accompanying claims.

### Description of the diagrams

By way of example only, embodiments of the present invention will now be described with reference to the accompanying drawings wherein:
- Figure 1: is a schematic illustration of an embodiment of the invention, namely a decking cone device; the decking cone device is shown in side view from two different perpendicular lateral directions;
- Figure 2: is a schematic illustration of the decking device of Figure 1 shown in underside view;
- Figure 3: is a schematic illustration of the decking cone device of Figure 1 shown in side view with internal parts of the device presented in dotted outline:
- Figure 4: is an illustration of an application of the decking cone device shown in Figures 1 to 3 applied to aligning and holding a suspension sub-assembly of a road vehicle onto a corresponding receiving portion of a chassis of the vehicle;
- Figure 5: is a schematic illustration in plan view of a mounting plate of the aforesaid suspension sub-assembly including three mounting holes and a central hole with two notches for engaging underside alignment projections of the decking cone device illustrated in Figures 1 to 3;
- Figure 6: is a schematic illustration of the underside alignment projections of the decking cone device engaged into the notches shown in Figure 5; and

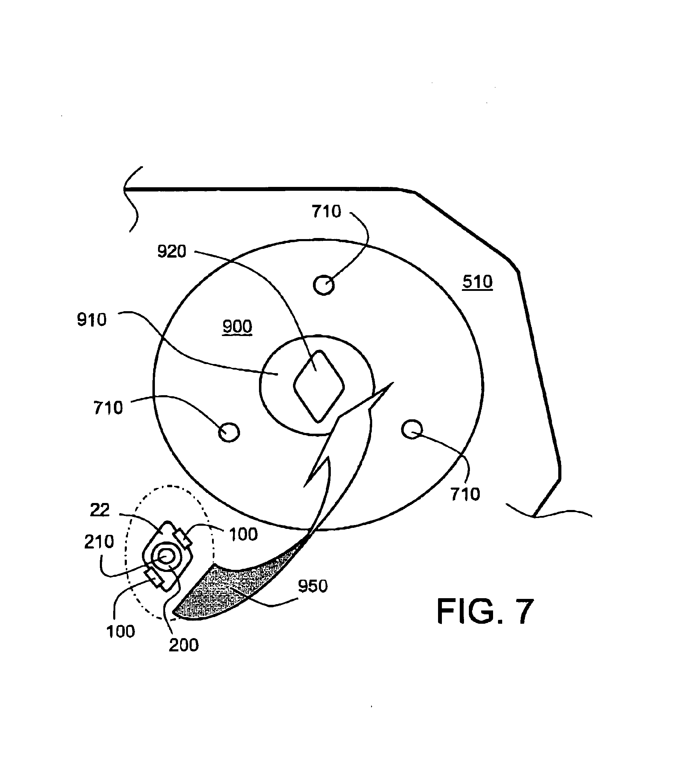

- Figure 7: is a schematic illustration of an rhombic alignment hole included in the receiving portion of the chassis of the vehicle shown in Figure 4 in plan view, with a plan view of the decking cone device inset to illustrate a manner in which the decking cone is received into the rhombic alignment hole; and
- Figure 8: is a schematic illustration of an alignment rotation force generated by an interaction of the decking cone device with the rhombic hole shown in Figure 7 so as to align securing holes of the mounting plate of the suspension sub-assembly with corresponding holes included in the receiving portion of the chassis.

### Description of embodiments of the invention

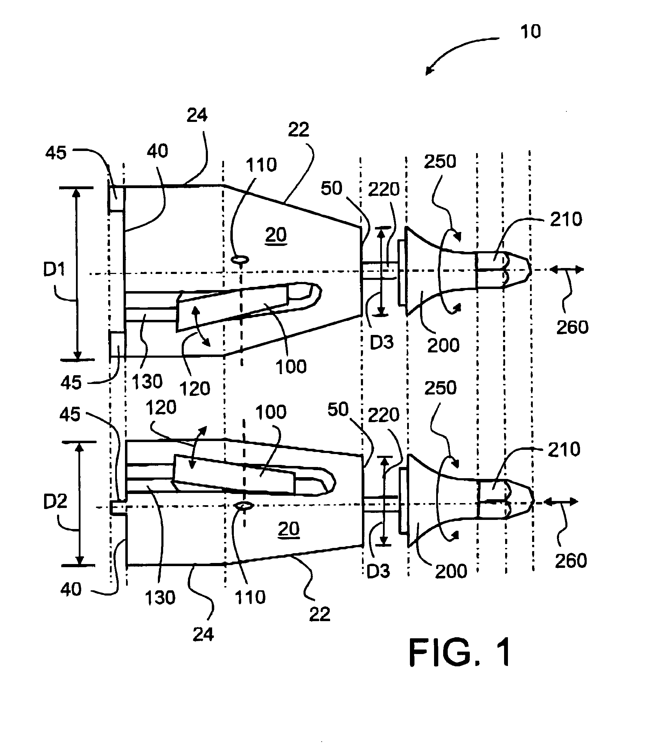

Referring to Figure 1, there is shown a decking cone device indicated generally by 10. The cone device 10 includes an outer part 20 comprising a tapered portion 22 of complex profile and a parallel sided portion 24 having parallel side wall external surfaces. The decking device 10 has an underside surface 40 of substantially rhombic profile having a first width D1 in a first lateral direction and a second width D2 in a second lateral direction perpendicular to the first direction; the first and second direction are perpendicular to a central longitudinal axis of the decking device 10. The first width D1 is approximately in a range of 20% to 80% greater than the second width D2. The tapered portion 22 therefore has a continuously varying taper angle relative to a longitudinal central axis of the device 10 as illustrated as defined by the underside surface 40 being of rhombic form.

The underside surface 40 has projecting therefrom two underside alignment projections 45 as illustrated at extremities of the first width D1. A upperside surface 50 of the outer part 20 opposite to the underside surface 40 is of circular profile with a diameter D3. The diameter D3 is less than the first and second widths D1, D2 respectively so as to provide for the tapered portion 22 which is important to functioning of the decking device 10 when in operation as will be elucidated later.

The decking device 10 further includes two spring-loaded flipper arms 100 on mutually opposite sides of the decking device 10. Each flipper arm 100 is pivotally mounted substantially midway therealong about a transverse axis 110, for example by way of the flipper arm 100 including a transverse hole midway therealong for receiving a pivot pin included along the axis 110. Each flipper arm 100 is operable to pivot as shown by arrows 120 and is accommodated in a recess 130 formed or machined into sides of the decking device 10.

The outer part 20 is optionally fabricated from steel by CNC machining operations or by casting operations. Moreover, the flippers 100 are optionally fabricated from aluminium or similar alloy softer than steel. However, one or more of the outer part 20 and the flipper arms 100 can be fabricated by casting or molding processes.

The decking device 10 further includes an inner rotating part 200 comprising a cone portion terminating at a remote end thereof in a nut 210 susceptible to being engaged with an motorized nut-driver, spanner or similar type of rotary drive tool. The inner rotating part 200 includes an elongate shaft 220 projecting into a hole machined into the outer part 20 as will be further elucidated later. The inner part 200 is susceptible to being rotated in operation relative to the outer part 20 as denoted by an arrow 250, and also being moved longitudinally along the aforesaid central axis of the device 10 in respect of the outer part 20 as denoted by an arrow 260.

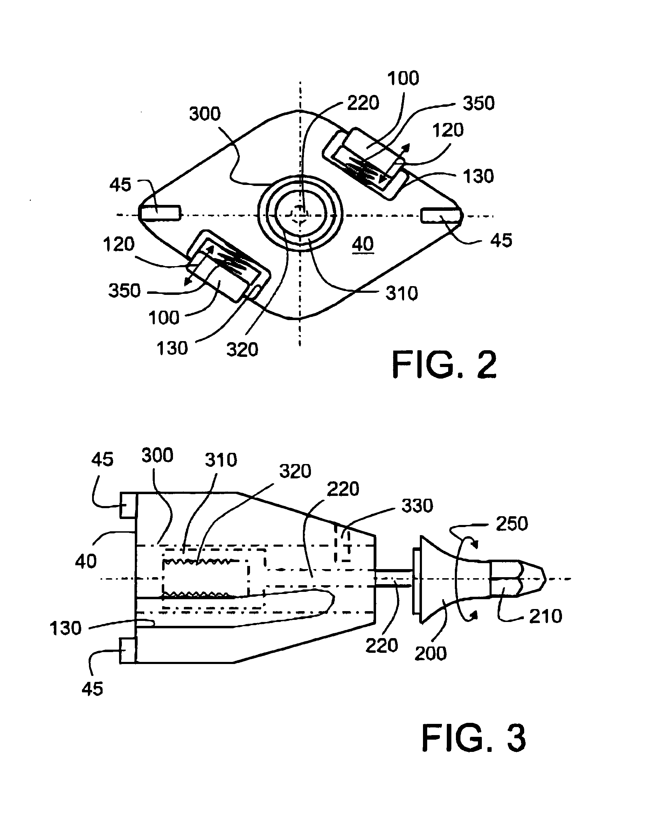

The inner part 200 is retained within the outer part 20 by way of a retaining component 330 included at an upper region of the tapered portion 22 just prior to the upperside surface 50; the retaining component in shown in Figure 3. Moreover, the retaining component 330 is conveniently implemented as a screw, aluminium rivet or friction-retained pin. The inner and outer parts 200, 20 respectively provide a conveniently-sized device for assembly personnel to handle in manufacturing assembly environments.

Referring next to Figure 2, the decking device 10 is shown in underside view wherein the underside surface 40 of rhombic form is to be seen. The alignment projections 45 are shown at extremities of the first width D1. The underside surface 40 is substantially planar and has formed thereinto a central hole 300 for accommodating a threaded head 310 having an end hole with a thread 320 formed into its inner surface as shown. The threaded head 310 is coupled to the elongate shaft 220 and is beneficially integral therewith as illustrated in Figure 3. Moreover, the flipper arms 100 are shown on aforementioned mutually opposite sides of the outer part 20 of the device 10. Each flipper arm 100 is provide with an associated biasing coil spring 350 operable to preferentially bias the flipper arm 100 at its lower end near the underside surface 40 in an outward direction away from the central axis of the device 10.

The decking device 10 is designed to be employed in manufacture but not form a permanent functional part or a vestigial part of a final manufactured product, for example a road vehicle. Thus, the decking device 10 is susceptible to being recycled and reused to assist manufacturing by aligning and subsequently holding, for example, a suspension sub-assembly of a road vehicle to a corresponding receiving portion of the vehicle during its manufacture. As will be elucidated later, the decking device 10 is capable of providing automatic angular alignment and also holding items together once angularly aligned.

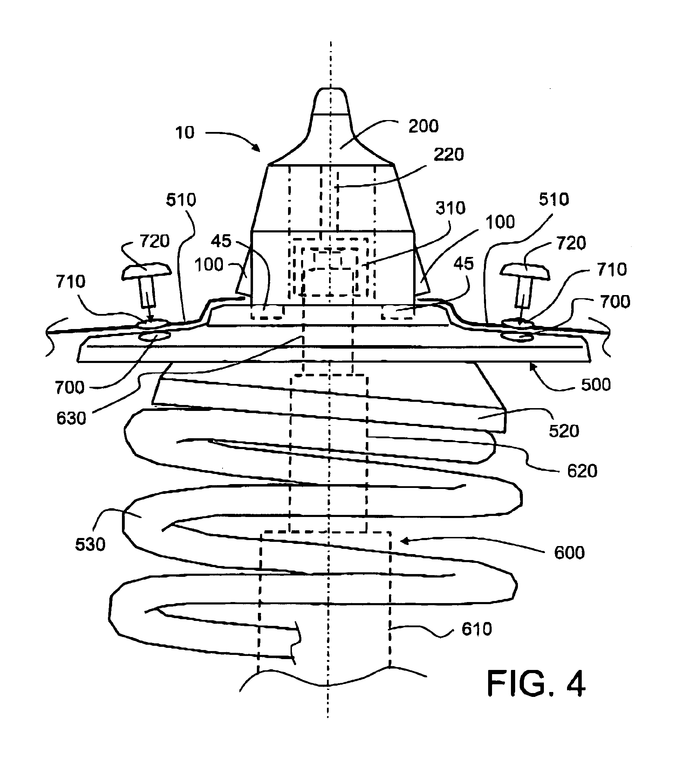

Referring to Figure 4, there is shown the device 10 employed in manufacture to align and subsequently hold an upper surface of an automotive mounting plate indicated by 500 to an underside of a receiving portion 510 of a road vehicle. The mounting plate 500 forms part of a sub-assembly further comprising an interface component 520 of approximately truncated conical outer profile in abutment with an underside surface of the mounting plate 500, and a coil spring 530 in abutment with an underside of the of the interface component 520. The interface component 520 is operable to cooperate with the mounting plate 500 to cope with angular misalignment resulting from manufacturing tolerances in manufacture of the coil spring 530 as illustrated. The subassembly further comprises an oil damper shock-absorber indicated generally by 600. The shock-absorber 600 includes an outer cylinder part 610 remote from the interface component 520 and an inner piston rod 620. The inner rod 620 includes an upper rod portion 630 of reduced diameter as shown; the upper rod portion 630 has a thread formed onto its outer surface; this thread of the upper rod portion 630 is compatible with the thread 320 formed on the inner surface of the threaded head 310 of the decking device 10.

In manufacturing, the aforesaid sub-assembly is assembled together and then during manufacturing offered, for example by way of a hydraulic pusher actuating on an underside of the sub-assembly in an upward direction, to the receiving portion 510 of the chassis of the road vehicle. The sub-assembly can, for example, be provided by a sub-contractor to a road vehicle manufacturer. It is often encountered that the mounting plate 500 is not reliably angularly orientated, and the coiled spring 530 can suffer manufacturing tolerances which render the interface component 520 non-perpendicular to a central longitudinal axis of the shock-absorber 600. A technical problem is encountered in manufacture when offering the sub-assembly to the receiving portion 510 in that the mounting plate 500 is not easily accessible to assembly personnel to angularly adjust by eye when the sub-assembly is offered to receiving portion 510. Such alignment is necessary for aligning three holes 700 of the mounting plate 500 with three corresponding holes 710 formed into the receiving portion 510 so as to receive fixing screws 720. In manufacturing, it is also convenient to apply the fixing screws 720 at a later step than at an earlier step of offering the sub-assembly to the receiving portion 510.

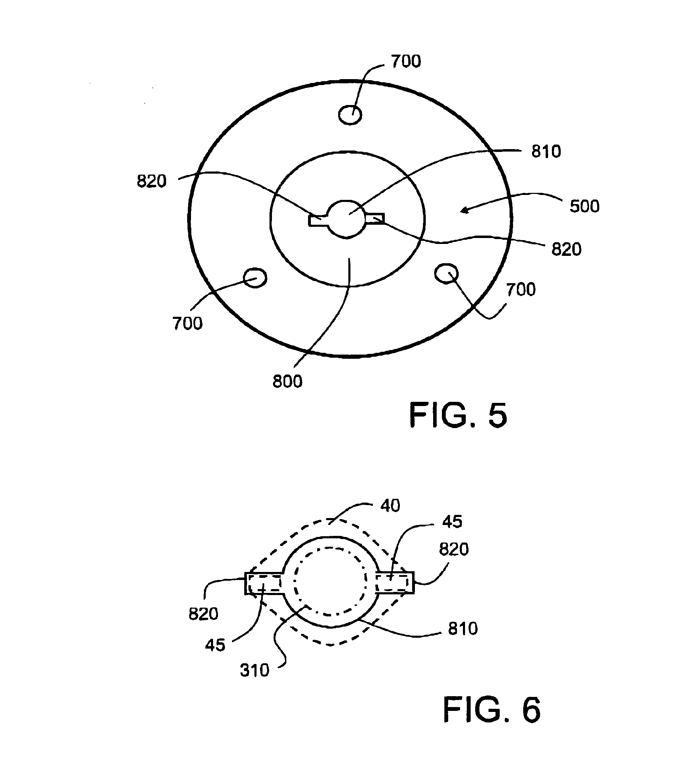

Thus, in manufacture, the decking device 10 is employed in a method of manufacture. Prior to the sub-assembly being offered to the receiving portion 510, the decking device 10 is applied to the mounting plate 500. The mounting plate 500, as shown in Figure 5, comprises a slightly recessed outer portion including the aforesaid holes 700 and an inner raised portion 800 including a central hole 810 provided with two notches 820 as peripheral sides thereof as illustrated. The central hole 810 is of smaller area than the underside surface 40 of the decking device 10 as shown in Figure 6 so that the device 10 is not able to fall through the central hole 810 when placed thereupon. Moreover, the two projections 45 of the decking device 10 are operable to engage into the notches 620 of the holes 810 as illustrated in Figure 6. The nut 210 is then rotated, for example using a hydraulically-driven spanner, to engage the threaded head 310 of the device 10 onto the thread formed on the external surface of the upper rod portion 630.as illustrated in Figure 4.

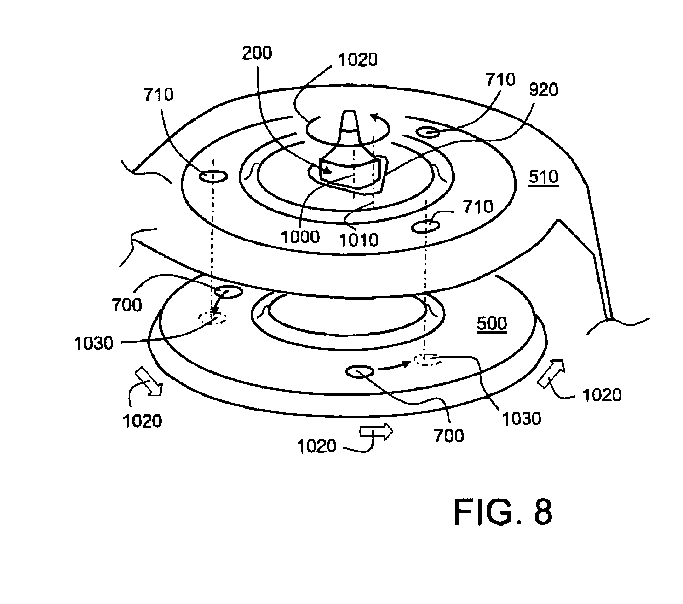

Next, in the method, the sub-assembly together with its decking device 10 attached as shown in Figure 5 to an upper surface of the mounting plate 500 is offered as denoted by an arrow 950, by action of the aforesaid hydraulic pusher (not shown), such that the nut 210 of the inner part 200 is guided into a receiving hole 920 of rhombic shape formed into an upwardly formed recess 910 of substantially circular peripheral profile provided in a general recess 900 also of circular peripheral form of the receiving portion 510. The receiving hole 920 of rhombic shape is arranged to be slightly greater in size, for example by a margin of circa 0.2 mm, than the underside surface 40 of the decking device 10. During such offering 950 of the decking device 10 mounted on the mounting plate 500 of the sub-assembly, the tapered portion 22 of the decking device 10 contacts onto peripheral sides of the receiving hole 920 of rhombic shape so as to generate a turning force denoted by arrows 1020 in Figure 8. In a situation wherein an extremity axis 1000 of the decking device 10 adjacent one of the projections 45 is not aligned with an extreme corner axis 1010 of the receiving hole 920, the force of the pusher not only renders the mounting plate 500 horizontal as illustrated in Figure 4 when pushed into contact with the underside surface of the receiving portion 510, but also causes the holes 700 of the mounting plate 500 to be rotated to correctly aligned positions 1030 so that the holes 700 angularly align with the holes 710 of the receiving portion 510. Moreover, the device 10 is also operable, on account of concentricity of the hole 810 and its notches 820 in respect of the holes 700, and also concentricity of the receiving hole 920 in respect of the holes 710, to ensure that the sub-assembly is correctly laterally aligned to the receiving portion 510, namely centralized thereto. When the pusher has actuated the sub-assembly and its decking device 10 to a sufficient height, the flipper arms 100 spring out by action of their springs 350 so as to engage onto outside peripheral edges of the receiving hole 920. On account of the flipper arms 100 being fabricated from a soft material and having rounded peripheral edges, for example fabricated from aluminium, they do not damage pre-applied paint coatings in a vicinity of the receiving hole 920; chipping or damage of paint coatings during manufacture can potentially subsequently give rise to rust spots so the decking device 10 is carefully designed to take such detail into consideration to ensure a high quality product. The sub-assembly is held in position not only by way of the flipper arms 100, but the decking device 10 being retained on account of its threaded head 310 being engaged onto the threaded upper rod portion 630. Thereafter, the vehicle chassis including its receiving portion 510 can be transported, for example along a production line, together with its suspension sub-assembly and the decking device 10 attached thereto, for the screws 720 to be subsequently applied; conveniently, the holes 700 of the mounting plate 500 are threaded holes for engaging onto threads formed on the screws 720.

When the screws 720 have been applied to firmly attach the mounting plate 500 to he receiving portion 510, and thus firmly attaching the suspension sub-assembly to the chassis of the vehicle, the nut 210 is rotated to release the threaded head 310 from the threaded upper rod portion 630 so as to enable assembly personnel to remove the decking device 10 from the vehicle. The decking device 10 can then be returned for reuse further back along the production line.

The decking device 10 is thus potentially of considerable benefit in manufacturing products, for example road vehicles but not limited thereto, when two of more component parts require to be mutually centralized and angularly aligned, and then subsequently held together in preparation for a subsequent fixing operation to join the two or more component parts together. On account of the angular alignment forces 1020 being automatically generated to mutually align the holes 700, 710, operator intervention, for example performing precision angular alignment by eye, is not required, thereby simplifying and expediting manufacture. The decking device 10 is thereby capable of providing a convenient and effective solution to aforementioned technical problems which the present invention seeks to address.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural.

Numerals included within parentheses in the accompanying claims are intended to assist understanding of the claims and should not be construed in any way to limit subject matter claimed by these claims.

## Claims

1. A decking cone device (10) adapted for automatically mutually angularly aligning and laterally aligning at least a first component part (500) to a second component part (510), said decking device (10) including one or more features (45) for laterally and angularly engaging onto or into said first component part (500), said decking device (10) having external surfaces (22) so shaped so as to cooperate with edges of a hole (920) formed in the second component part (510), the decking device (10) being operable so as to generate when the decking device (10) engaged onto or into the first component part (500) is offered to the hole (920) in the second component part (510) lateral and angular alignment forces (1020) so as to mutually laterally and angularly align said first component part (500) to said second component part (510).

2. A decking device (10) as claimed in claim 1. wherein the device (10) further comprises retaining features (100) for maintaining the first and second component parts (500, 510) mutually held together when mutually offered together.

3. A decking device (10) as claimed in claim 1 or 2, wherein the device (10) comprises a tapered portion (22) so shaped so as to generate minimal angular alignment forces when the tapered portion (22) is angularly aligned to the hole (920), said tapered portion (22) being so shaped so as to be capable of generating progressively increasing alignment forces as the device (10) is progressively offered into the hole (920).

4. A decking device (10) as claimed in claim 3, wherein the tapered portion (22) is formed so as to be of substantially rhombic cross-section to cooperate with the hole (920) being implemented to be also of substantially rhombic shape.

5. A decking device (10) as claimed in any one of the preceding claims, wherein the tapered portion (22) at its greatest transverse cross-sectional area is adapted to be substantially similar in shape to said hole (920) and a margin smaller than said hole (920).

6. A decking device (10) as claimed in claim 5, wherein said margin is substantially 0.2 mm.

7. A decking device (10) as claimed in claim 2, wherein said retaining features (100) include at least one pivotally-mounted member (100) resiliently biased (350) outwardly from said device (10), said at least one pivotally-mounted member (100) being operable to clip onto one or more edges of said hole (920) for retaining said decking device (10) engaged with said hole (920) and thus held to said second component part (510).

8. A decking device (10) as claimed in any one of the preceding claims, said device (10) including an attachment (200, 310, 320) for attaching said device (10) to said first component part (500, 630) for maintaining them mutually affixed when the decking device (10) in operation is offered to said hole (920) in said second component part (510).

9. A decking device (10) as claimed in any one of the preceding claims, said device (10) being adapted to be reused in manufacture for repetitively mutually aligning examples of said first and second components parts (500, 510).

10. A decking device (10) as claimed in any one of the preceding claims adapted for mutually laterally and angularly aligning automotive suspension subassemblies (500, 520, 530, 600) to corresponding portions (510) of vehicle chasses during road vehicle manufacture.

11. A method of applying a decking cone device (10) for automatically mutually angularly aligning and laterally aligning at least a first component part (500) to a second component part (510), said method including steps of:
(a) engaging said decking device (10) into or onto said first component part (500), said decking device (10) including one or more features (45) for laterally and angularly engaging onto said first component (500);
(b) offering said first component part (500) via said decking device (10) engaged thereto to a hole (920) included in the second component part (510), said decking device (10) having external surfaces (22) so shaped so as to cooperate with edges of the hole (920) formed in the second component part (510) so as to generate when the decking device (10) engaged onto the first component part (500) is offered to the hole (920) in the second component part (510) lateral and angular alignment forces (1020) so as to mutually laterally and angularly align said first component part (500) to said second component part (510); and
(c) deploying retaining features (100) for holding the device (10) into a position for retaining said mutual angular and lateral alignment, so that said at least first and second component parts (500, 510) remain mutually in angular and lateral alignment.

12. A method as claimed in claim 11, said method including further steps of:
(d) applying fasteners to affix the at least first and second component parts (500, 510) mutually together in angular and lateral alignment; and
(e) after mutual fixing of the at least first and second component parts together, removing the decking device for subsequent reuse in angularly and laterally aligning similar at least first and second component parts (500, 510).
